# EUROPEAN PATENT APPLICATION

(11) **EP 1 850 553 A1**
(43) Date of publication of application: **31.10.2007**
(21) Application number: 06828185.6
(22) Date of filing: 27.11.2006
(51) Int. Cl.: H04L 29/06

(54) **A METHOD AND AN APPARATUS FOR REALIZING WAP BROWSE SERVICE**

(30) Priority: 26.01.2006 CN 200610033415
(71) Applicant: Huawei Technologies Co Ltd, Longgang District Shenzhen Guangdong 518129 (CN)
(72) Inventor: LI, Ronggao, Guangdong 518129 (CN)
(74) Representative: Pfenning, Meinig & Partner GbR
(86) International application number: PCT/CN2006/003177
(87) International publication number: WO 2007/085166

(57) **Abstract**

A method and an apparatus for realizing WAP browse service, include: the terminal initiates WAP browse request, WAP gateway receives the request and forwards it to the server (1); the server returns the answer of the browse request to the WAP gateway (2) ; the WAP gateway extracts the status code from the answer, and converts said status code to the preset corresponding display information (3) ; the WAP gateway encodes the answer of the request and sends it off to the terminal (4) ; the terminal receives the answer of the request and displays it (5). The WAP gateway maps the status code to the corresponding display information according to the preset map relationship between the status code and the display information, and maps the language type to the corresponding character set according to the preset map relationship between the language type and the character set. This invention realizes that: WAP gateway specifies and replaces the service information sent back from the server, displays more friendly aware information on the terminal; the terminal displays the service content according to the language predetermined by the user, so eases the user's application.

## Description

### Field of the Invention

The present invention relates to displaying WAP browse content, and particularly to a method and device for implementing WAP browse service.

### Background of the Invention

Wireless Application Protocol (WAP) browse refers to a mobile terminal accessing to the Internet through wireless networks and WAP gateway. Like a traditional computer, the mobile terminal can gain access to rich and colorful content of the Internet. Because of different capacities of different mobile terminals, the properties supported by terminals, such as character set, language, image, size and browser version, are different. Therefore, it is necessary for WAP gateway to apply adapter treatment to browse content requested by the mobile terminal before sending the content to the mobile terminal.

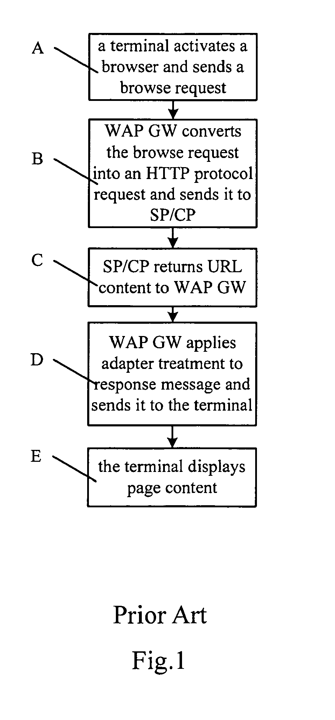

In the prior art, the method for a mobile terminal to implement WAP browse through a WAP gateway shown in Figure 1 includes the following processes:

Block A: The mobile terminal activates a WAP micro browser and sends a WAP browse request. The WAP browse request contains Uniform Resource Locator (URL) of the requested browse content and WAP protocols to be applied between the mobile terminal and the WAP gateway;

Block B: The WAP gateway applies protocol conversion to the browse request sent by the mobile terminal, and converts WAP protocol message of the browse request into HTTP protocol message of the Internet, and then sends the HTTP protocol message to Service Provider/Content Provider (SP/CP);

Block C: The SP/CP returns requested URL content according to requested URL to the WAP gateway;

Block D: The WAP gateway applies adapter treatment to the response message returned from SP/CP according to capacity of the mobile terminal, and codes the adapted content with the WAP protocols, and then sends the response message to the mobile terminal;

Block E: The mobile terminal displays requested content.

There are various means for the WAP gateway to obtain capacity information of a mobile terminal, one of which is that: when the mobile terminal sends a browse request to the WAP gateway, the capacity information of the mobile terminal is carried in the request message. The capacity information reported by the mobile terminal is shown as follows:

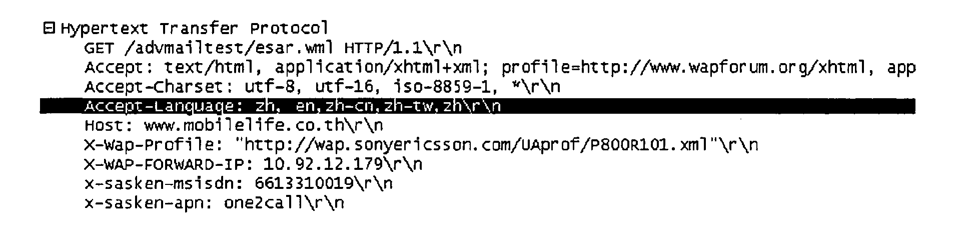

Upon receiving the requested content returned from SP/CP, the WAP gateway performs content reduction and conversion according to the capacity of the mobile terminal, that is, deletes unsupported content and elements, converts format and restructures the relevant content. Then the WAP gateway codes the content and sends the coded content to the mobile terminal. Therefore, all the contents displayed on the mobile terminal are contents supported by the mobile terminal, thus enhancing user's service experience.

For example, a mobile terminal, which supports only black-and-white images, is going to download a color image provided by an SP/CP. After the mobile terminal sends an image downloading request, the WAP gateway applies protocol conversion to the request and then sends the request to the SP/CP. The SP/CP returns the requested color image to the WAP gateway. According to the capacity information in the downloading request sent by the mobile terminal, the WAP gateway knows that the mobile terminal supports only black-and-white images. Because the content returned by SP/CP is color content, the WAP gateway converts the color image into black-and-white, and then delivers the converted content to the mobile terminal. Upon receiving the content, the mobile terminal displays the black-and-white image.

However, inventors found that there are the following features in applying terminal adapter treatment according to capacity information reported by the mobile terminal:

(1) It is unable to customize the language type, and thus the user may not recognize the content shown on the mobile terminal. For example, a mobile terminal supports Chinese display, but the user only understands English content. Therefore, if the user visits a Chinese page using the mobile terminal, the mobile terminal displays Chinese information, and for the user who does not know Chinese, all the characters displayed are distorted codes.

(2) It is unable to customize returned information from a SP/CP. For example, if the response content returned by a SP/CP to the mobile terminal is code 400, which stands for bad request. After the WAP gateway sends the code to the mobile terminal, "bad request" will be displayed on the mobile terminal, which obviously is not friendly to user.

### Summary of the Invention

The present invention provides a method and device for implementing WAP browse service, in which service contents are displayed on a terminal in user customized language, thus being convenient for the user to use, and a WAP gateway can customize and replace display information returned from an SP/CP, and display more friendly prompts on the terminal.

An embodiment of the present invention provides a method for displaying customized content for WAP browse and the method includes: sending, by a terminal, a WAP browse request to a network; performing, by the network, converting and processing operation on information to be returned to the terminal to obtain corresponding information according to predefined corresponding relation information; receiving and displaying the corresponding information, by the terminal.

Optionally, the predefined corresponding relation information includes: corresponding relation information between status code and display information, wherein the status code is information to be delivered to the terminal from the network, and the display information is information actually delivered to the terminal for display; and/or corresponding relation information between terminal recognizable language type and character set, wherein the corresponding relation information is indexed by predefined language type information of the terminal.

Optionally, the process of performing converting and processing operation on information to be returned to the terminal to obtain corresponding information includes: converting a status code to be returned to the terminal into corresponding pre-customized display information according to the corresponding relation information between the status code and the display information; and/or mapping a language type to a corresponding character set according to the corresponding relation information between the language type and the character set and coding a request response according to the character set.

An embodiment of the present invention provides a device for implementing WAP browse service and the device includes: a corresponding relation information storage unit, adapted to store predefined corresponding relation information; a converting and processing unit, adapted to perform converting and processing operation on information to be returned to a terminal to obtain corresponding information according to the predefined corresponding relation information after the terminal sends a WAP browse request to a network; and a display information delivery unit, adapted to deliver the corresponding information to the terminal for display.

The corresponding relation information storage unit may include: a storage unit for corresponding relation information between status code and display information, adapted to store corresponding relation information between the status code to be delivered to the terminal from the network and the display information actually delivered to the terminal; and/or a storage unit for corresponding relation information between language type and character set, adapted to store corresponding relation information between terminal recognizable language type and character set, wherein the corresponding relation information is indexed by predefined language type information of the terminal.

The converting and processing unit may include: a status code converting and processing unit, adapted to convert status code to be returned to the terminal into corresponding pre-customized display information according to corresponding relation information between the status code and the display information; and/or a language type converting and processing unit, adapted to map language type to corresponding character set according to corresponding relation information between the language type and the character set and code a request response according to the character set.

In some embodiments of the present invention, service content can be displayed on the mobile terminal in user customized language, thus it is convenient for the user. In some embodiments, the WAP gateway can customize and replace the service information returned from the content server, and display friendly prompts on the mobile terminal.

### Brief Description of the Drawings

Fig. 1 shows a flow chart of a method for a mobile terminal to implement WAP browse through WAP gateway in the prior art;

Fig. 2 shows a flow chart of a method for displaying WAP browse content according to customized information in an embodiment of the invention;

Fig.3 shows a schematic diagram of a device in an embodiment of the invention.

### Detailed Descriptions of the Embodiments

The techniques in the present invention will be further described in detail as follows with reference to the accompanying drawings and embodiments.

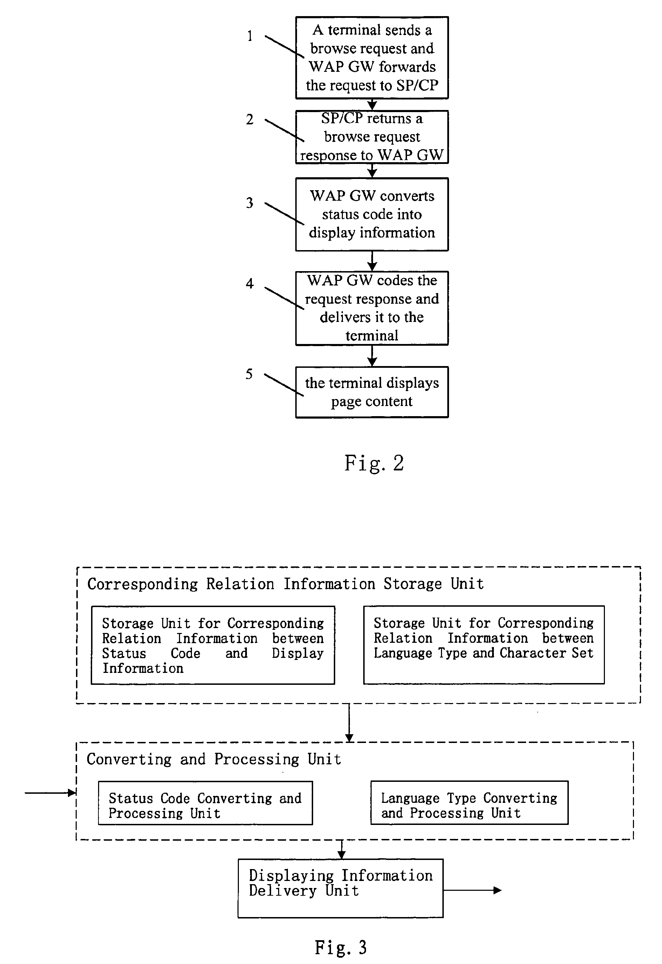

As shown in Figure 2, the flow chart of a method for displaying WAP browse content according to customized information in an embodiment of the invention includes the following processes:

Block 1: A mobile terminal sends a WAP browse request. Upon receiving the request, a WAP gateway forwards the request to a SP/CP.

Block 2: The SP/CP returns a browse request response to the WAP gateway.

When the SP/CP successfully returns a user requested browse page to the WAP gateway, the response contains the page content and status code 200. If the server is not configured or the server can not respond when a URL is requested, the status code in the response is 400.

Block 3: The WAP gateway extracts the status code from the response, and converts the status code into corresponding pre-customized display information.

A mapping relationship between the status code and display information can be pre-customized in the WAP gateway. The status code refers to information to be delivered to the mobile terminal from a network, and the display information refers to information actually delivered to the mobile terminal for display. That is, the mapping relationship refers to corresponding relation information between the status code to be delivered from the network and the display information actually delivered to the mobile terminal.

In Block 3, according to the mapping relationship, the status code is mapped into corresponding display information. For example, there is a mapping table defined in the WAP gateway as shown in Table 1, wherein StandardInfo refers to standard information corresponding to status code, and DisplayInfo, which can be customized according to user need, refers to the content delivered to the mobile terminal. For example, when status code is 400, the StandardInfo is "Bad Request". "please try again system busy" is used to replace the status code 400 in order to display more friendly information. If the method is used in China, the display information can be Chinese, such as " 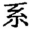 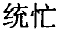 , 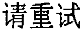 " instead of status code 400. Furthermore, the page content is also adapted according to the mobile terminal capacity information.

**Table 1**

| StatusCode | StandardInfo | DisplayInfo |
|---|---|---|
| 200 | Ok | Ok |
| 201 | Created | Created |
| 202 | Accepted | Accepted |
| 301 | Moved Permanently | Waiting |
| 302 | Found | |
| 400 | Bad Request | Please try again system busy |
| 403 | Forbidden | Please try again system busy |
| 404 | Not Found | Request url not found |
| 701 | User black list | |
| 705 | Connecting web server failure | Please try again system busy |
| 706 | Read data from web server failure | Please try again system busy |

Block 4: The WAP gateway codes the browse request response and delivers it to the mobile terminal.

Every language has multiple character sets for coding, and the adopted character sets for coding can be defined in the WAP gateway. The WAP gateway codes the browse request response according to the predefined character set.

To meet the need for multilingual applications, the mapping relationship between language type and character set, i.e. the corresponding relation information between mobile terminal recognizable language type and character set, can also be stored in the WAP gateway, and the corresponding relation information is indexed by corresponding predefined language type of the mobile terminal. As shown in Table 2, Language refers to language type and Charset refers to the corresponding character set. For example, when the language type is "Simplified Chinese", GB2312 is adopted as the character set.

**Table 2**

| Language | Charset |
|---|---|
| Arabic | WINDOWS-1256 |
| Dutch | ISO-8859-1 |
| German | ISO-8859-1 |
| Malay | ISO-8859-1 |
| Simplified Chinese | GB2312 |
| Traditional Chinese | BIG5 |
| French | IS0-8859-1 |

When configuring the WAP gateway, a specifically adopted language type is set according to application needs. For example, the language type is set as Simplified Chinese if the method is used in China. Before coding, the WAP gateway first maps the language type into the corresponding character set according to the mapping relationship between the language type and the character set, then codes the browse request response according to the corresponding character set.

Block 5: Upon receiving the request response, the mobile terminal displays the response, and thus the content is displayed on the mobile terminal in customized language type.

The techniques in the embodiment of the present invention ensures that the service content can be displayed on the mobile terminal in the language the user customized, thus it is convenient for the user to use. The WAP gateway can customize and replace the returned service information from content server, and display more friendly prompts on the mobile terminal.

An embodiment of the present invention also provides a device for realizing WAP browse service. As shown in Figure 3, the device mainly includes corresponding relation information storage unit, converting and processing unit, and display information delivery unit. These units will be described with reference to Fig.3 as follows.

(1) Corresponding Relation Information Storage Unit

This unit is used for storing predefined corresponding relation information.

The corresponding relation information storage unit includes at least one of the following units: storage unit for corresponding relation information between status code and display information, and storage unit for corresponding relation information between language type and character set.

The storage unit for corresponding relation information between status code and display information is used for storing corresponding relation information between the status code to be delivered to the mobile terminal from a network and the display information actually delivered to the mobile terminal, so that at the network, the status code can be converted into display information which is easily acceptable to a mobile terminal user.

The storage unit for corresponding relation information between language type and character set is used for storing corresponding relation information between mobile terminal recognizable language type and character set. The corresponding relation information is indexed by predefined language type information of the mobile terminal. Therefore the mobile terminal unrecognizable language type information can be converted into predefined mobile terminal recognizable language type information.

(2) Converting and Processing Unit

This unit is used for performing converting and processing operation on information to be returned to a mobile terminal to obtain corresponding information according to the predefined corresponding relation information after the mobile terminal sends a WAP browse request to the network.

Corresponding to the structure of the corresponding relation information storage unit, the converting and processing unit includes at least one of the following units: status code converting and processing unit and language type converting and processing unit.

The status code converting and processing unit is used for converting the status code to be returned to the mobile terminal into corresponding pre-customized display information according to the corresponding relation information between the status code and the display information.

The language type converting and processing unit is used for mapping a language type to a corresponding character set according to the corresponding relation information between the language type and the character set and coding the browse request response according to the character set.

(3) Display Information Delivery Unit

This unit is used for delivering the above information to the mobile terminal for display.

The device described in the embodiment of the present invention may be installed in the WAP gateway of a network, and of course the device may also be installed in other entities having familiar functions, or entities at proper network positions.

The functions implemented by the above units are previously described in detail, and so there is no need to repeat here.

Finally, it should be made clear that the above embodiments are only to illustrate the techniques of the present invention, but not to limit the techniques. Although the present invention is described in detail with reference to the preferred embodiments, apparently, those skilled in the art can make various variations and modifications without departing from the spirit or scope of the invention. If these variations and modifications fall in scopes as defined by the appended claims and their equivalents, the invention intends to cover these variations and modifications.

## Claims

1. A method for implementing WAP browse service, comprising:
sending, by a terminal, a WAP browse request to a network;
performing, by the network, converting and processing operation on information to be returned to the terminal to obtain corresponding information according to predefined corresponding relation information and sending the corresponding information to the terminal;
receiving and displaying the corresponding information, by the terminal.

2. The method according to claim 1, wherein the predefined corresponding relation information comprises:
corresponding relation information between status code and display information, wherein the status code is information to be delivered to the terminal from the network, and the display information is information actually delivered to the terminal for display; and/or
corresponding relation information between terminal recognizable language type and character set, wherein the corresponding relation information is indexed by predefined language type information of the terminal.

3. The method according to claim 2, wherein the process of performing converting and processing operation on information to be returned to the terminal to obtain corresponding information comprises:
converting a status code to be returned to the terminal into corresponding pre-customized display information according to the corresponding relation information between the status code and the display information; and/or
mapping a language type to a corresponding character set according to the corresponding relation information between the language type and the character set and coding a request response according to the character set.

4. The method according to claim 3, wherein converting a status code to be returned to the terminal into corresponding pre-customized display information comprises:
receiving and forwarding, by the WAP gateway, the request to a server;
returning, by the server, a browse request response to the WAP gateway;
extracting, by the WAP gateway, the status code from the response; and
converting, by the WAP gateway, the status code into the corresponding pre-customized display information.

5. The method according to claim 1, 2, 3 or 4, further comprising:
defining adopted character sets for coding in the WAP gateway to serve as reference for coding the request response.

6. A device for implementing WAP browse service, comprising:
a corresponding relation information storage unit, adapted to store predefined corresponding relation information;
a converting and processing unit, adapted to perform converting and processing operation on information to be returned to a terminal to obtain corresponding information according to the predefined corresponding relation information after the terminal sends a WAP browse request to a network; and
a display information delivery unit, adapted to deliver the corresponding information to the mobile terminal for display.

7. The device according to claim 6, wherein the corresponding relation information storage unit comprises:
a storage unit for corresponding relation information between status code and display information, adapted to store corresponding relation information between the status code to be delivered to the terminal from the network and the display information actually delivered to the terminal; and/or
a storage unit for corresponding relation information between language type and character set, adapted to store corresponding relation information between terminal recognizable language type and character set, wherein the corresponding relation information is indexed by predefined language type information of the terminal.

8. The device according to claim 6 or 7, wherein the converting and processing unit comprises:
a status code converting and processing unit, adapted to convert status code to be returned to the terminal into corresponding pre-customized display information according to corresponding relation information between the status code and the display information; and/or
a language type converting and processing unit, adapted to map language type to corresponding character set according to corresponding relation information between the language type and the character set and code a request response according to the character set.
